Europäisches Patentamt

European Patent Office

Office européen des brevets

(19)

(11) Numéro de publication : **0 092 625**
**B1**

(12) # FASCICULE DE BREVET EUROPÉEN

(45) Date de publication du fascicule du brevet :
12.02.86

(21) Numéro de dépôt : 82400753.8

(22) Date de dépôt : 27.04.82

(51) Int. Cl.⁴ : **A 01 K 31/02**, A 01 K   1/03

(54) **Enceinte pour parquer les animaux, telle que batterie de cages.**

(43) Date de publication de la demande :
02.11.83 Bulletin 83/44

(45) Mention de la délivrance du brevet :
12.02.86 Bulletin 86/07

(84) Etats contractants désignés :
AT BE CH DE FR GB IT LI LU NL SE

(56) Documents cités :
CH-A-   245 597
GB-A-   194 054
US-A- 2 252 348

(73) Titulaire : **Cassou, Robert**
**Rue Clémenceau**
**F-61300 L'Aigle (FR)**

**Cassou, Maurice**
**Rue Clémenceau**
**F-61300 L'Aigle (FR)**

**Cassou, Bertrand**
**Saint Symphorien des Bruyères**
**F-61300 L'Aigle (FR)**

(72) Inventeur : **Cassou, Bertrand**
**Saint Symphorien des Bruyères**
**F-61300 L'Aigle (FR)**

(74) Mandataire : **Rodhain, Claude**
**Cabinet Claude Rodhain 30, rue la Boétie**
**F-75008 Paris (FR)**

Jouve, 18, rue St-Denis, 75001 Paris, France

EP 0 092 625 B1

## Description

L'invention concerne de façon générale, les enceintes unitaires ou compartimentées destinées à parquer les animaux, par exemple les batteries de cages pour oiseaux (poules, dindes, pintades, faisans ou autres), constituées de rangées parallèles et superposées de cages contiguës, formant un ensemble compact longitudinal le long duquel peuvent se déplacer des moyens d'alimentation, de traitement, ou d'insémination des animaux, les ouvertures d'accès des cages étant dirigées vers l'extérieur de la batterie et alignées selon son plan longitudinal.

Dans ces batteries de type connu, les portes clôturant les ouvertures d'accès des cages sont le plus souvent constituées, à l'instar du reste de la cage, de barreaux métalliques soudés définissant des volets, pouvant s'ouvrir vers l'intérieur, ou mieux encore vers l'extérieur, articulés ou non sur des charnières horizontales ou verticales. Ces volets sont associés ou non à des organes de rappel, en position fermée, et à des moyens de verrouillage maintenant les volets ou portes dans cette position fermée où les ouvertures d'accès des cages sont obturées.

Quand on sait que ces batteries comprennent plusieurs centaines de cages, on conçoit aisément le problème posé par la fabrication, la pose et la manipulation des portes qui sont en nombre égal aux cages. En outre, et indépendamment des coûts de production liés à la fabrication des cages, la conception des portes doit être attentivement examinée, car il convient que leur maniement ne stresse pas ou ne blesse pas les animaux maintenus dans les cages et facilite leur préhension. Or, les portes actuelles ne répondent qu'en partie à ces impératifs, et il n'est pas rare qu'à l'ouverture ou à la fermeture, les animaux soient perturbés ou blessés. Par ailleurs, les portes formées de barreaux soudés laissent fréquemment apparaître des sections à angle vif sur lesquelles les animaux se blessent lorsqu'ils passent le cou pour se nourrir dans les mangeoires situées à l'extérieur des cages et s'étendant le long des portes.

On connaît également, par exemple par le document de brevet CH-A-245 597, des batteries d'élevage pour poules pondeuses constituées de rangées horizontales de cages disposées en gradins, les cages d'une même rangée étant closes à leur partie avant seulement par un fil métallique continu s'étendant longitudinalement devant toutes les cages de la rangée, et par un abreuvoir et une mangeoire constitués par deux profilés allongés s'étendant également longitudinalement devant toutes ces cages, au moins l'un de ces deux profilés étant amovible de telle sorte que son retrait dégage au moins une partie de la face avant des cages, de préférence à la partie inférieure de celles-ci, afin de permettre l'accès aux animaux qui les occupent. Cette disposition a pour inconvénient de ne pas permettre l'accès à un seul animal à la fois, par exemple pour le soigner, l'inséminer, etc., car pour avoir accès à un animal déterminé, il est nécessaire de dégager partiellement l'avant de toutes les cages ; il en résulte des risques de provoquer sinon la fuite de plusieurs animaux, au moins le dérangement et le stress de quelques-uns d'entre eux lors d'une opération effectuée sur seulement un seul.

L'invention concerne donc une enceinte pour parquer les animaux telle qu'une batterie de cages pour la production d'oiseaux, poules, dindes, pintades, faisans ou autres, du type constitué d'au moins un étage de cages ou d'au moins une rangée de cages contiguës, juxtaposées et alignées selon un même plan, lesquelles cages comportent des ouvertures respectives, situées dans un même plan longitudinal par rapport à la rangée de cages et adaptées à être munies d'au moins un élément de fermeture constitué par une partie d'un câble s'étendant au moins partiellement dans ledit plan longitudinal, caractérisé en ce que chaque câble est disposé en forme de boucle et présente au moins un brin dans lequel est inséré au moins un cadre mobile ouvert dans sa partie centrale et relié par deux de ses côtés opposés au même brin pour constituer avec ledit câble une boucle sans fin tendue et mobile dans un mouvement de défilement dans la direction longitudinale du câble au moyen d'organes de roulement, de telle sorte que par défilement de la boucle, le ou les cadres mobiles puissent être amenés sélectivement devant au moins l'une des ouvertures de l'une des rangées de cages ou d'un étage de cages à plusieurs rangées, les ouvertures devant lesquelles ne se trouve aucun cadre mobile étant fermées par une partie du ou des câbles.

Selon un mode de réalisation avantageux, les ouvertures d'au moins une rangée de cages sont obturées par deux câbles indépendants constituant avec au moins un cadre mobile une boucle sans fin, respectivement tendus sur deux jeux de poulies superposés, ces deux câbles définissant quatre brins parallèles espacés défilant devant les ouvertures des cages, chaque cadre mobile étant relié par deux de ses côtés opposés à deux brins appartenant chacun à un câble différent.

Selon une caractéristique de l'invention, les deux jeux de poulies bordent les extrémités opposées de l'enceinte et sont réglables, d'une part, dans un plan horizontal pour modifier la tension des câbles et, d'autre part, dans un plan vertical pour faire varier leur écartement.

D'autres caractéristiques et avantages ressortiront de la description ci-après et des dessins annexés dans lesquels :

la figure 1 est une vue en élévation d'une batterie de cages réalisée conformément à l'invention,

la figure 2 est une vue en élévation du détail du cadre ou fenêtre mobile, vu de l'intérieur de la cage,

la figure 3 est une vue partielle en coupe de la fenêtre mobile et de ses moyens de guidage,

la figure 4 est une vue schématique de dessus d'une variante de réalisation.

L'invention concerne de façon générale, une conception nouvelle d'enceintes destinées à parquer les animaux. Le terme « enceinte » est pris dans son sens le plus large, et couvre aussi bien les cages ou batteries de cages que les enclos destinés à parquer ou trier des animaux.

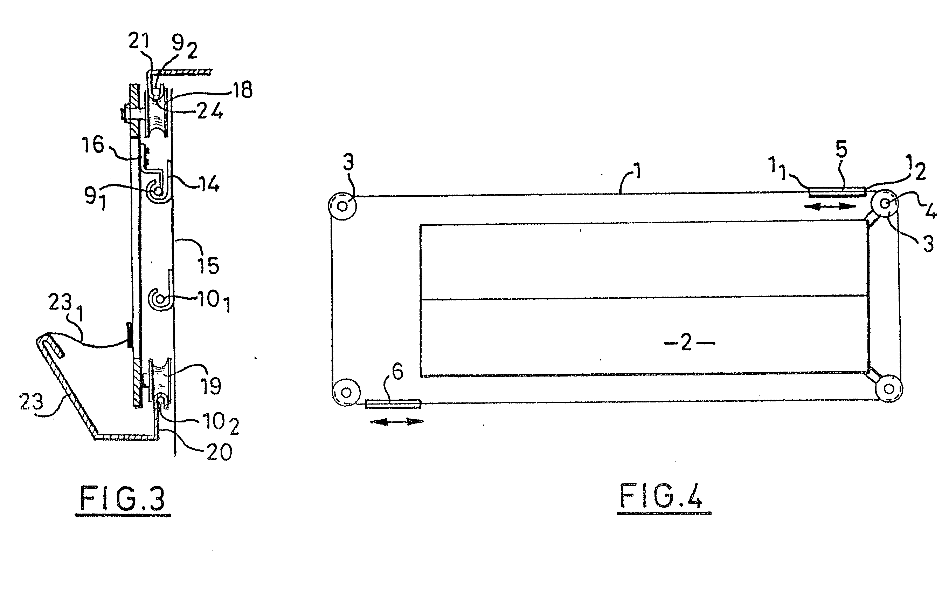

En effet, l'idée essentielle de l'invention qui consiste à obturer en tout ou partie une enceinte par des câbles ou fils horizontaux, électrifiés ou non, peut être appliquée à tout type d'enceinte, quelle que soit la taille des animaux. Il suffira seulement de choisir selon les dimensions de l'enceinte et selon la taille des animaux, des câbles de section et de résistance adaptés et des moyens appropriés de guidage des câbles. L'invention peut trouver une application avantageuse dans le tri des animaux, puisque les fenêtres ou cadres mobiles, peuvent être amenés en un point quelconque de la périphérie de l'enceinte, et par conséquent permettent d'avoir l'accès à tel ou tel animal situé en un point donné de l'enclos. Cette conception pourrait être celle illustrée en fig. 4, où l'on observe que les câbles 1 constituent des boucles sans fin, horizontales, parallèles et espacées suivant la hauteur de l'enceinte, ces câbles entourant toute la périphérie de l'enceinte ou enclos 2 qui peut être unitaire ou fragmenté en deux ou plusieurs compartiments. Les câbles 1 sont guidés sur des poulies ou galets à gorge 3 montés mobiles en rotation sur des axes 4, afin de pouvoir se déplacer dans deux directions opposées. Les deux extrémités opposées $1_1$ et $1_2$ des câbles 1 sont reliées aux deux bords du cadre mobile 5 réalisé sous forme d'une fenêtre. Ce cadre pourrait s'apparenter à une porte s'étendant sur toute la hauteur de l'enceinte, permettant ainsi le passage de l'animal, cette ouverture pouvant être accouplée à un véhicule de transport de bétail ou communiquer avec un autre enclos, ce qui est fréquemment le cas dans les unités de triage.

Les câbles 1 reliés à la fenêtre ou cadre mobile 5, peuvent comporter une seconde fenêtre 6 desservant le côté opposé de l'enceinte où est située la fenêtre 5, de manière à permettre à deux opérateurs de travailler simultanément. Bien entendu, les fenêtres peuvent être déplacées manuellement, ou si elles sont lourdes (ce qui serait vraisemblablement le cas de celles équipant des enceintes à bestiaux), à l'aide de moyens de commande automatique tels que moteurs. Ce type d'installation est d'une grande simplicité, puisqu'en dehors des câbles et des poulies, il suffit de prévoir sur le trajet du câble, des organes de guidage, qui peuvent être constitués par de simples goussets ou supports en forme de gouttière fixés sur des montants verticaux de l'enceinte.

De façon plus particulière, et non limitative, l'invention peut être appliquée aux enceintes compartimentées, par exemple aux batteries de cages destinées à recevoir des animaux et notamment celles servant à toute production des oiseaux. Un exemple d'une telle réalisation est illustré sur les fig. 1, 2 et 3, la fig. 1 montrant en élévation une batterie de cages 7 formée de trois étages $7_1$, $7_2$, $7_3$ de rangées de cages superposées. Les dispositions étant identiques d'une rangée à l'autre, la description qui va suivre se référera à un seul étage de cages.

Les cages sont alignées et contiguës dans un même plan longitudinal et leurs ouvertures d'accès sont tournées dans la même direction afin de pouvoir être aisément accessibles. Ici, les ouvertures d'accès des cages sont situées sur la face longitudinale de la batterie, et s'étendent dans un même plan linéaire. Ces ouvertures 8 correspondant sensiblement aux dimensions de la cage, sont obturées conformément à l'invention par deux câbles 9 et 10 indépendants et parallèles, chacun de ceux-ci formant une boucle sans fin et étant montés mobiles, en translation alternative, respectivement sur des jeux de poulies 11 et 12. Les deux extrémités de chacun des câbles sont accrochées à un cadre ou fenêtre mobile 13 pouvant être amené sélectivement devant chacune des ouvertures 8 des cages.

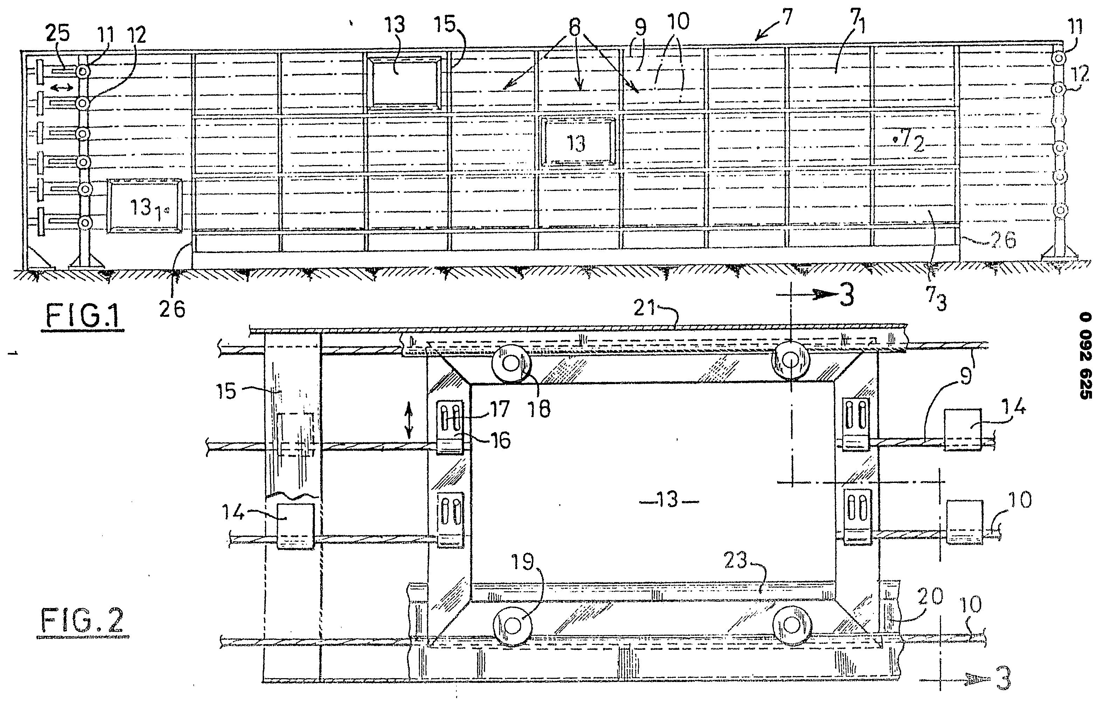

La fig. 2 montre le détail de la fixation et du guidage des câbles et fenêtres mobiles. Les câbles sont, comme précisé ci-dessus, montés tendus sur des jeux de poulies 11 et 12, mais ils sont également guidés sur leur longueur dans des ferrures 14 fixées sur les montants 15 des cages, ces ferrures extérieures aux montants ayant la forme (fig. 3) de gouttières dans lesquelles circulent les brins intérieurs $9_1$ et $10_1$ des câbles 9 et 10. Ces câbles sont en effet soudés ou sertis sur l'extrémité d'attaches 16 vissées sur la face interne de la fenêtre mobile 13. Ces attaches ou pattes de fixation apparaissent également en fig. 2, qui est une vue en élévation de la fenêtre mobile vue de l'intérieur de la cage. On observe que les pattes de fixation 16 comportent des lumières oblongues 17 permettant un réglage en hauteur des câbles. En effet, la position relative des câbles peut être modifiée afin que leur écartement puisse être adapté à la taille des animaux. A ce sujet, les poulies 11 et 12 sont réglables en hauteur par tout système à vis ou manivelle connu, de manière à ce que l'espace compris entre les deux brins intérieurs $9_1$, $10_1$ des câbles 9 et 10 puisse être modifié à loisir.

En dehors des organes de guidage disposés ponctuellement sur le trajet des câbles, la fenêtre comporte, quant à elle, des moyens favorisant son déplacement et sa retenue dans le plan vertical des cages. Ces moyens sont constitués par des galets 18 et 19 roulant sur des rails de guidage 20 et 21 (fig. 3). Le rail intérieur 20 sur lequel roulent les galets 19 est avantageusement constitué par le bord interne 22 de la mangeoire 23 qui court le long des cages, ce bord étant recourbé et cintré pour former, d'une part, une gorge dans laquelle coulisse le brin extérieur $10_2$ du câble 10, et d'autre part, un rail de forme convexe dont le rayon de courbure correspond au rayon de la gorge des galets 19. Ainsi, la fenêtre 13 est parfaitement guidée sur toute la longueur des câbles à sa partie inférieure. Son guidage supérieur est tout à fait similaire puisque les galets 18 roulent également sur un profilé de guidage 21 dont l'extrémité comporte un ourlet 24 sur lequel s'appuient les galets 18 et à l'intérieur duquel coulisse le brin extérieur $9_2$ du câble 9. Ce profilé s'étend, comme la mangeoire 23, sur toute la longueur de la batterie de cages et forme ainsi un rail rigide pour la fenêtre mobile 13.

La fenêtre mobile se présentant sous la forme d'un cadre ouvert (permettant évidemment l'accès à l'intérieur des cages), a des dimensions correspondant sensiblement aux dimensions des ouvertures des cages, de manière à ce qu'elle permette, lorsqu'elle est amenée en regard de l'ouverture d'une cage, de pouvoir extraire l'animal de sa cage, ou encore en introduire un nouveau, sans gêne, sans stress et sans blessure de l'animal.

A cet égard et afin, si nécessaire, de permettre un accès simultané à l'ensemble des cages, il est prévu que les jeux de poulies 11 et 12 sont associés à des tendeurs 25 (fig. 1) constitués de façon connue, de vis sans fin et écrous permettant de déplacer la poulie dans un plan longitudinal perpendiculaire à son axe. Ce réglage individuel des poulies permet ainsi de maintenir tendu un câble et de relâcher l'autre. Par exemple, si l'on veut avoir accès à l'ensemble des ouvertures des cages, on peut envisager de détendre totalement le câble 9 et de maintenir tendu le câble 10, ce qui dégagera ainsi la moitié de la hauteur des ouvertures des cages. La partie dégagée sera suffisante pour introduire les animaux dans les cages, et ceux-ci retenus par le câble 10 encore tendu, ne s'échapperont pas des cages, bien que le câble 9 soit détendu. Lorsque les cages seront remplies d'animaux, on tendra à nouveau le câble 9 qui jouera de nouveau son rôle de barreaux souples.

Les câbles peuvent s'étendre au-delà des bords latéraux 26 de la batterie, de manière à ce que l'on puisse amener les fenêtres 13 en dehors des ouvertures des cages dans une position de garage, comme illustré en $13_1$ sur la fig. 1. Cette voie de garage pourrait être remplacée par une simple grille susceptible d'être accrochée ou clipsée sur la fenêtre 13 afin de l'obturer lorsque l'installation est inactive. Ces volets ou grilles auraient pour effet d'obturer la fenêtre et d'éviter ainsi que les animaux puissent s'échapper par son ouverture, tout en conservant l'accès à la mangeoire.

Cette fenêtre mobile peut être déplacée manuellement ou encore être associée à des moyens de commande automatique, par exemple un moteur électrique. Par ailleurs, étant donné que les batteries de cages sont généralement alimentées par des nourrisseurs à déplacement commandé et programmé, il est parfaitement possible de fixer l'un des bords de la fenêtre sur ce distributeur automatique afin qu'elle soit déplacée simultanément. De même, on peut fixer sur cette fenêtre mobile les planches et autres moyens de contention des animaux, en vue de leur insémination artificielle. Enfin, on pourra également utiliser la fenêtre mobile comme moyen d'entraînement d'un cache-mangeoire $23_1$ se présentant sous la forme d'un volet souple ou ruban. En effet, le fenêtre se déplaçant dans un plan parallèle à la mangeoire (fig. 3), cette fenêtre pourra être reliée à un ruban ou toile venant progressivement recouvrir la mangeoire au fur et à mesure du déplacement de la fenêtre le long des cages et pouvant ainsi former une seconde mangeoire destinée à un autre type d'aliment. Cette mangeoire mobile est reliée à deux trémies ; la trémie supérieure étant destinée à distribuer l'autre type d'aliment en quantité réglable, la trémie inférieure pouvant récupérer les refus lors du rembobinage de la mangeoire mobile.

Il est encore possible selon l'invention, de relier tout ou partie des câbles à une source de courant basse tension, afin de pouvoir les électrifier périodiquement. Cette disposition pourrait notamment être applicable dans le cas où l'on alimente les cages en animaux et que l'un des câbles est distendu comme suggéré ci-dessus. Dans cette éventualité, le câble inférieur 10 pourrait être légèrement électrifié pour maintenir les animaux dans le fond des cages et éviter qu'ils sautent pardessus le câble 10 lorsque le câble 9 est détendu.

L'invention présente de multiples avantages puisqu'elle supprime toutes les portes des batteries et ne les remplace que par une seule : la fenêtre mobile. Cette suppression entraîne une réduction considérable du temps de travail du personnel, qui n'a plus besoin d'ouvrir ou de fermer la porte une multitude de fois en fonction des opérations qu'il doit effectuer sur chaque animal (vaccination — traitement médical — ébécage — insémination artificielle, chargement et déchargement des animaux). L'animal peut par ailleurs manger tranquillement en passant son cou entre les câbles sans gêne et sans risque de blessure. La fenêtre constitue par ailleurs un repère efficace, puisque l'opérateur sait à tout moment la cage qu'il vient de contrôler, même s'il est arrêté dans son travail. Les cages obturées par les câbles sont fermées efficacement sans aucun risque de voir les animaux s'échapper en raison d'une étourderie. Les problèmes liés à la fabrication, à l'usure et au vieillissement des portes sont supprimés et les essais ont montré que la production peut être accrue en raison de la réduction sensible du stress des animaux qui jusqu'alors étaient profondément perturbés par les portes agissant à la manière de volets ou de couperets qui claquent.

Enfin, et comme illustré en fig. 4, il est possible de prévoir deux ou plus de fenêtres permettant à plusieurs opérateurs de pouvoir travailler simultanément sans se gêner. L'exemple donné en fig. 4, au début de la description qui se réfère à un enclos d'animaux, peut parfaitement être appliqué également aux batteries de cages d'oiseaux, la réalisation étant tout à fait identique à celle visée en fig. 1 et 2, à la seule différence que les axes des poulies 3 sont verticaux, alors que dans l'exemple visible en fig. 1, ces axes sont horizontaux.

## Revendications

1. Enceinte pour parquer les animaux telle qu'une batterie de cages (7) pour la production d'oiseaux, poules, dindes, pintades, faisans ou autres, du type constitué d'au moins un étage de cages ou d'au moins une rangée de cages contiguës, juxtaposées et alignées selon un même plan, lesquelles cages comportent des ouvertures (8) respectives situées dans un plan longitudinal par rapport à la rangée de cages et adaptées à être munies d'au moins un élément de fermeture constitué par une partie d'un câble (9-10) s'étendant au moins partiellement dans ledit plan longitudinal, caractérisée en ce que chaque câble (9-10) est disposé en forme de boucle et présente au moins un brin dans lequel est inséré au moins un cadre mobile (13) ouvert dans sa partie centrale et relié par deux de ses côtés opposés au même brin pour constituer avec ledit câble une boucle sans fin tendue et mobile dans un mouvement de défilement dans la direction longitudinale du câble (9, 10) au moyen d'organes de roulement (11-12), de telle sorte que par défilement de la boucle, le ou les cadres mobiles (13) puissent être amenés sélectivement devant au moins l'une des ouvertures (8) de l'une des rangées de cages ou d'un étage de cages à plusieurs rangées, les ouvertures devant lesquelles ne se trouve aucun cadre mobile étant fermées par une partie du ou des câbles.

2. Enceinte selon la revendication 1, caractérisée en ce que les ouvertures (8) d'au moins une rangée de cages sont obturées par deux câbles indépendants (9-10) constituant avec au moins un cadre mobile (13) une boucle sans fin, respectivement tendus sur deux jeux de poulies (11-12) superposés, ces deux câbles (9, 10) définissant quatre brins parallèles espacés ($9_1$-$9_2$, $10_1$-$10_2$) défilant devant les ouvertures (8) des cages, chaque cadre mobile (13) étant relié par deux de ses côtés opposés à deux brins ($9_1$-$10_1$) apparte-nant chacun à un câble différent.

3. Enceinte selon la revendication 2, caractérisée en ce que les deux jeux de poulies (11-12) bordent les extrémités opposées (26) de l'enceinte et sont réglables, d'une part, dans un plan horizontal pour modifier la tension des câbles (9-10) et, d'autre part, dans un plan vertical pour faire varier leur écartement.

4. Enceinte selon l'une quelconque des revendications 1 à 3, caractérisée en ce que le cadre mobile (13) est inséré dans ledit brin au moyen de pattes de fixation (16) rendues solidaires de la face interne dudit cadre mobile (13), des brins intérieurs ($9_1$-$10_1$) des câbles étant maintenus et guidés sur toute leur longueur dans des ferrures (14), en forme de gouttières, fixées sur les montants (15) des cages.

5. Enceinte selon l'une quelconque des revendications 1 à 4, caractérisée en ce que le cadre mobile (13) comporte, sur sa face intérieure, des galets (18-19) circulant sur des rails (21-22) inférieur et supérieur de guidage et de retenue du cadre, ceux-ci étant parallèles à deux brins exté-rieurs ($9_2$-$10_2$) des câbles, qui sont intégrés ou non dans ces rails.

6. Enceinte selon la revendication 5, caractérisée en ce que le rail inférieur (22) est constitué par le bord supérieur, conformé en ourlet, d'une mangeoire (23), présentant un rayon de cintrage correspondant à la forme d'une gorge prévue sur les galets (22).

7. Enceinte selon la revendication 5, caractérisée en ce que le rail supérieur (21) est constitué d'un profilé linéaire fixe s'étendant sur toute la longueur de la rangée de cages, le bord de ce rail étant cintré pour former, par sa partie convexe, un appui à des galets supérieurs (18) du cadre mobile (13) et par sa partie concave, en forme de gouttière, un guide au brin extérieur ($9_2$) du câble supérieur (9).

8. Enceinte selon l'une quelconque des revendications 1 à 7 du type constitué de plusieurs rangées de cages juxtaposées ayant leurs ouvertures alignées selon des plans parallèles ou non, caractérisée en ce que les câbles (1) constituent des boucles sans fin horizontales entourant l'intégralité de l'enceinte et guidés sur des jeux superposés de poulies horizontales (3) à axe vertical (4), ces câbles (1) étant reliés à au moins deux cadres mobiles (5-6) pouvant être amenés sélectivement en tout point quelconque des deux côtés de l'enceinte.

9. Enceinte selon l'une quelconque des revendications 1 à 8, caractérisée en ce que le cadre mobile (13) est associé à une câblerie à enroulement par commande automatique.

10. Enceinte selon la revendication 9, caractérisée en ce que le cadre (13) est accouplé à un dispositif d'alimentation à entraînement automatique et programmé.

11. Enceinte selon la revendication 9, caractérisée en ce que le cadre mobile (13) est entraîné par un moteur électrique.

12. Enceinte selon l'une quelconque des revendications 1 à 11, caractérisée en ce que le cadre mobile (13) sert de châssis support à un cache-mangeoire (231) en forme de bavette ou ruban.

13. Enceinte selon la revendication 12, caractérisée en ce que le cache-mangeoire (231) définit une seconde mangeoire mobile pour la distribution d'une nouvelle substance consommable.

14. Enceinte selon l'une quelconque des revendications 1 à 13, caractérisée en ce que le cadre mobile (13) constitue un châssis support pour la fixation d'une planchette à colliers de contention servant à l'insémination artificielle des animaux.

15. Enceinte selon l'une quelconque des revendications 1 à 14, caractérisée en ce qu'à une partie au moins des câbles (10) est reliée à une source de courant basse-tension, est isolée électriquement du reste des cages, et est périodiquement électrifiée.

## Claims

1. Enclosure for accommodating animals such as a battery of cages (7) for rearing birds, chickens, turkeys, guinea fowl, pheasants or the like, of the type comprising at least one tier of cages or at least one row of adjoining cages, juxtaposed and aligned in the same plane, the said cages comprising openings (8) arranged respectively in the same longitudinal plane with respect to the row of cages and adapted so that they may be provided with at least one closure element formed by part of a cable (9, 10) extending at least partially in the said longitudinal plane, characterised in that each cable (9, 10) is arranged in the form of a loop and comprises at least one end, to which is connected at least one movable frame (13), which is open in its central part and connected on two of its opposite sides to the said end so as to form with the said cable a taut continuous loop which can move in the longitudinal direction of the cable (9, 10) by means of rolling elements (11, 12), such that as a result of the movement of the loop, the movable frame or frames (13) can be brought selectively in front of at least one of the openings (8) of one of the rows of cages or of one tier of cages with a plurality of rows, the openings in front of which there is no movable frame being closed by a part of the cable or cables.

2. Enclosure according to claim 1, characterised in that the openings (8) of at least one row of cages are obturated by two independent cables (9, 10), which together with at least one movable frame (13) form a continuous loop, respectively tensioned on two superimposed sets of pulleys (11, 12), the two cables (9, 10) defining four parallel ends which are spaced apart ($9_1$, $9_2$, $10_1$, $10_2$) and which run in front of the openings (8) of the cages, each movable frame (13) being connected on two of its opposite sides to two ends ($9_1$, $10_1$), each belonging to a different cable.

3. Enclosure according to claim 2, characterised in that the two sets of pulleys (11, 12) border the opposite ends (26) of the enclosure and can be adjusted on the one hand in a horizontal plane to alter the tension of the cables (9, 10) and on the other hand in a vertical plane to vary the distance at which the cables are spaced apart.

4. Enclosure according to any one of claims 1 to 3, characterised in that the movable frame (13) is connected to the said end by means of securing hooks (16), which are made integral with the internal face of the said movable frame (13), the inner ends ($9_1$, $10_1$) of the cables being held and guided over their entire length in fittings (14), in the form of channels secured to the cage uprights (15).

5. Enclosure according to any one of claims 1 to 4, characterised in that, on its inner face, the movable frame (13) comprises rollers (18, 19) running on lower and upper rails (21, 22), for guiding and retaining the frame, the said rails being parallel to two outer ends ($9_2$, $10_2$) of the cables, which may or may not be integral with the said rails.

6. Enclosure according to claim 5, characterised in that the lower rail (22) is formed by the upper rim-shaped edge of a feeder (23), having a bending radius corresponding to the shape of a channel provided on the rollers (22).

7. Enclosure according to claim 5, characterised in that the upper rail (21) is formed from a fixed linear section extending over the entire length of the row of cages, the edge of the said rail being curved so as to form, with is convex part, a support for the upper rollers (18) of the movable frame (13), and with its concave part, in the shape of a channel, a guide for the outer end ($9_2$) of the upper cable (9).

8. Enclosure according to any one of the claims 1 to 7, of the type comprising a plurality of rows of juxtaposed cages, of which the openings are aligned in planes which may or may not be parallel, characterised in that the cables (1) form continuous loops which surround the entire enclosure and are guided on superimposed sets of horizontal pulleys (3) with a vertical axis (4), the said cables (1) being connected to at least two movable frames (5, 6) which can be brought selectively to any point of the two sides of the enclosure.

9. Enclosure according to any one of claims 1 to 8, characterised in that the movable frame (13) is associated with a cable with automatically controlled winding.

10. Enclosure according to claim 9, characterised in that the frame (13) is connected to a feeding device with automatic and programmed drive.

11. Enclosure according to claim 9, characterised in that the movable frame (13) is driven by an electric motor.

12. Enclosure according to claims 1 to 11, characterised in that the movable frame (13) acts as a support frame for a feeder cover ($23_1$) in the form of a flap or a strip.

13. Enclosure according to claim 12, characterised in that the feeder cover ($23_1$) defines a second movable feeder for the distribution of a further edible substance.

14. Enclosure according to any one of claims 1 to 13, characterised in that the movable frame (13) forms a support frame for securing a board with retaining collars used for the artificial insemination of the animals.

15. Enclosure according to any one of claims 1 to 14, characterised in that at least one part of the cables (10) is connected to a low-voltage current source, is electrically insulated from the rest of the cages, and is periodically electrified.

## Patentansprüche

1. Umschließung für die Tierhaltung wie Käfigbatterie für die Produktion von Geflügel, wie Hähnchen, Truthühner, Perlhühner, Fasane oder dergl., bestehend aus mindestens einer Käfigetage oder einer Nebeneinanderanordnung benachbarter, in einer Ebene angeordneter Käfige mit Öffnungen (8), die in bezug auf die Käfiganordnung in einer gleichen Längsebene angeordnet und mit mindestens einem Verschlußelement versehbar sind, das aus einem Teil eines Kabels (9-10) gebildet ist, welches sich mindestens teilweise in der Längsebene erstreckt, dadurch gekennzeichnet, daß jedes Kabel (9-10) in Form einer Schlaufe angeordnet ist und mindestens einen Strang aufweist, in dem mindestens ein beweglicher, in seinem zentralen Bereich offener Rahmen (13) angeordnet ist, der mit seinen gegenüberliegenden Seiten mit dem gleichen Strang verbunden ist, um mit dem Kabel (9-10) eine endlos gespannte Schlaufe zu bilden und der in einer Vorbeibewegung in Längsrichtung des Kabels (9-10) mittels Rollelementen (10-12) derart beweglich ist, daß durch Verstellbewegung der Schlaufe der oder die Rahmen (13) wahlweise vor mindestens eine der Öffnungen (8) einer Käfigreihe oder einer Käfigetage geführt werden können, wobei die Öffnungen, die sich nicht hinter dem bzw. den beweglichen Rahmen befinden, durch einen Teil des oder der Kabel geschlossen sind.

2. Umschließung nach Anspruch 1, dadurch gekennzeichnet, daß die Öffnungen (8) mindestens einer Käfigreihe durch zwei unabhängige Kabel (9-10) verschlossen sind, die mit mindestens einem beweglichen Rahmen (13) eine Endlosschlaufe bilden und die über zwei übereinander angeordnete Rollelemente (11-12) gespannt sind, wobei die zwei Kabel vier parallele, vor den Öffnungen (8) der Käfige vorbeiführende Stränge ($9_1$-$9_2$; $10_1$-$10_2$) bilden und jeder bewegliche Rahmen (13) mit seinen beiden Seiten mit zwei Strängen ($9_1$-$10_1$) verbunden ist, die jeweils zum anderen Kabel gehören.

3. Umschließung nach Anspruch 2, dadurch gekennzeichnet, daß die Rollelemente (11-12) an den äußeren Enden (26) der Umschließung angeordnet und verstellbar ausgebildet sind, einerseits in einer horizontalen Ebene zwecks Kabelspannung und andererseits in einer vertikalen Ebene zwecks Abstandsveränderung.

4. Umschließung nach einem der Ansprüche 1-3, dadurch gekennzeichnet, daß der bewegliche Rahmen (13) in den Strang mit Befestigungslaschen (16) eingesetzt ist, die fest an der Innenfläche des Rahmens angeordnet sind, wobei die inneren Stränge ($9_1$-$10_1$) der Kabel über ihre ganze Länge in Beschlägen (14) gehalten und geführt sind, die in Form von Rinnen, fixiert am Käfiggestell (15), ausgebildet sind.

5. Umschließung nach einem der Ansprüche 1 bis 4, dadurch gekennzeichnet, daß der bewegliche Rahmen (13) an seiner Innenfläche mit auf unteren und oberen Führungsschienen (21-22) drehbaren Rollen (18-19) versehen ist, die den Rahmen halten, wobei die Schienen zu den äußeren Strängen ($9_2$-$10_2$) der Kabel parallel verlaufen, die sich in oder außerhalb der Schienen (21-22) erstrecken.

6. Umschließung nach Anspruch 5, dadurch gekennzeichnet, daß die untere Schiene durch einen oberen Bord in Form einer Rundkante eines Futtertroges (23) gebildet ist, wobei der Bord eine Rundungsleiste, angepaßt an die Laufnutform der Rollen (18-19), bildet.

7. Umschließung nach Anspruch 5, dadurch gekennzeichnet, daß die obere Schiene (21) aus einem Linearprofil gebildet ist, das über seine ganze Länge an der Käfiganordnung befestigt ist, wobei der Bord der Schiene (21) abgerundet ist, um eine konvexe Aufnahme für die obere Rolle (18) des beweglichen Rahmens (13) und eine konkave Rinne als Führung für den äußeren Strang ($9_2$) des oberen Kabels (9) zu bilden.

8. Umschließung nach einem der Ansprüche 1 bis 7, gebildet aus einer Mehrzahl von benachbarten Käfigreihen, deren Öffnungen nach einer parallelen Ebene ausgerichtet sind oder nicht, dadurch gekennzeichnet, daß die Kabel (1) die Endlosschlaufen bilden, um die ganze Käfiganordnung horizontal herumgeführt angeordnet und über an vertikalen Achsen (4) angeordnete, horizontale Rollen (3) geführt sind, wobei die Kabel (1) mit zwei beweglichen Rahmen (5-6) verbunden und an alle Punkte wahlweise an beiden Seiten der Umschließung führbar ausgebildet sind.

9. Umschließung nach einem der Ansprüche 1 bis 8, dadurch gekennzeichnet, daß der bewegliche Rahmen (13) mit einer einrollbaren, automatisch regelbaren Kabelzugeinrichtung versehen ist.

10. Umschließung nach Anspruch 9, dadurch gekennzeichnet, daß der Rahmen (13) mit einer automatisch angetriebenen und programmierten Fütterungseinrichtung gekoppelt ist.

11. Umschließung nach Anspruch 9, dadurch gekennzeichnet, daß der bewegliche Rahmen (13) mit einem Elektromotor antreibbar ausgebildet ist.

12. Umschließung nach einem der Ansprüche bis 11, dadurch gekennzeichnet, daß der bewegliche Rahmen (13) als Tragchassis für eine Futtertrogabdeckung ($23_1$) in Form einer Platte oder eines Bandes dient.

13. Umschließung nach Anspruch 12, dadurch gekennzeichnet, daß die Futtertrogabdeckung ($23_1$) als zweiter beweglicher Futtertrog für die Zufuhr neuer Futtermittel ausgebildet ist.

14. Umschließung nach einem der Ansprüche 1 bis 13, dadurch gekennzeichnet, daß der bewegliche Rahmen (13) als Tragchassis für die Befestigung eines Trittes mit Haltekragen für die künstliche Besamung von Tieren ausgebildet ist.

15. Umschließung nach einem der Ansprüche 1 bis 14, dadurch gekennzeichnet, daß mindestens ein Teil der Kabel (10) mit einer Niederspannungsquelle verbunden und gegen den Rest der Käfige isoliert und periodisch elektrifizierbar ausgebildet ist.

FIG.1

FIG.2

FIG.4

FIG.3